# FASCICULE DE BREVET EUROPEEN

(11) **EP 0 711 206 B1**
(45) Date de publication et mention de la délivrance du brevet: **15.01.1997**
(21) Numéro de dépôt: 94923775.4
(22) Date de dépôt: 04.08.1994
(51) Int. Cl.: B02C 23/06, C04B 7/42

(54) **PROCEDE D'AMELIORATION DU BROYAGE DES MATIERES CRUES**
VERFAHREN ZUR VERBESSERUNG DES MAHLENS VON ROHMATERIALIEN
METHOD FOR IMPROVED GRINDING OF COARSE MATERIALS

(30) Priorité: 06.08.1993 FR 9309878
(43) Date de publication de la demande: 15.05.1996
(73) Titulaire: CHRYSO S.A., F-92120 Montrouge (FR)
(72) Inventeur: GUICQUERO, Jean-Pierre, F-94440 Santeny (FR); DEBEGNAC, Hélène, F-38090 Roche (FR); LAGRANGE, Jean, Julien, F-45300 Engenville (FR)
(74) Mandataire: Tilloy, Anne-Marie
(86) Numéro de dépôt international: FR9400977
(87) Numéro de publication internationale: WO9504599

(56) Documents cités:
- EP-A- 0 336 453
- GB-A- 2 106 889
- US-A- 3 329 517
- US-A- 5 131 600
- POWDER TECHNOLOGY, vol.66, 1991, LAUSANNE,CH pages 277 - 286 S. SOHONI 'The effect of grinding aids on the fine grinding of limestone , quartz and Portland cement clinker'
- SILIKATTECHNIK, vol.21, no.1, 1970 pages 11 - 17 W. SCHEIBE 'Einige Untersuchungen über die Auswahl von Mahlhilfsmitteln'
- CHEMICAL ABSTRACTS, vol. 76, no. 22, 29 Mai 1972, Columbus, Ohio, US; abstract no. 131031c, G. GHIGI 'Mechanism of sodium acetate as grinding aid in the milling of clinker' page 280 ;
- SOVIET INVENTIONS ILLUSTRATED Section Ch, Week 8743, 4 Novembre 1987 Derwent Publications Ltd., London, GB; Class A41, AN 87-305993 & SU,A,1 301 491 (KUZBASS POLY) 7 Avril 1987
- DATABASE WPI Week 8619, Derwent Publications Ltd., London, GB; AN 86-123198 & JP,A,61 063 551 (NIPPON ZEON KK) 1 Avril 1986
- SOVIET PATENTS ABSTRACTS Section Ch, Week 9115, 29 Mai 1991 Derwent Publications Ltd., London, GB; Class E19, AN 91-108774 & SU,A,1 586 778 (ARMTSVETMET PRODN) 23 Août 1990

## Description

L'invention concerne un procédé d'amélioration du broyage des matières dites crues servant à la fabrication du ciment.

### ETAT DE LA TECHNIQUE

On entend en général par broyage des minéraux l'opération qui consiste à fractionner dans un broyeur des minéraux grossiers issus d'un concasseur et ayant des dimensions pouvant aller jusqu'à plusieurs centimètres. Cette opération joue un rôle considérable dans de nombreuses industries, en particulier dans celles du ciment. Comme elle est très répandue et hautement consommatrice d'énergie, on estimait, il y a quelques années, qu'elle consommait 4% de l'énergie produite dans le monde.

Cependant seule une fraction évaluée à un centième de l'énergie fournie à un broyeur sert au broyage proprement dit des minéraux, c'est-à-dire à leur rupture. En effet, l'essentiel de l'énergie est accumulé par les minéraux sous la forme d'une augmentation de leur réactivité et d'une élévation de leur température.

L'augmentation de la réactivité des minéraux est nuisible en ce sens qu'elle contribue à l'agglomération des particules de minéraux broyés, ou à la diminution de leur aptitude à l'écoulement.

L'élévation de la température des minéraux lors du broyage ne peut généralement pas être mise à profit. Elle est de ce fait considérée comme une pure perte d'énergie.

On comprend donc aisément qu'il serait intéressant de disposer d'une technique permettant de réduire au minimum la fraction d'énergie accumulée par les matériaux et ne servant donc pas à leur rupture, afin d'augmenter la fraction d'énergie utilisée par le broyage proprement dit des minéraux, ceci se traduisant alors soit par une plus grande finesse des minéraux broyés, soit par un débit plus élevé des minéraux à travers le broyeur, équivalant à une diminution de l'énergie nécessaire au broyage.

Parmi les techniques proposées dans l'état de la technique pour atteindre cet objectif, on distingue notamment :
- celle faisant l'objet du brevet américain n° 3329517 qui consiste à broyer du clinker en présence d'un composé choisi dans le groupe constitué par les acétates d'alcanol-amine et les acétates d'alcanol-amine acétylés,
- l'utilisation selon la demande de brevet français n°2537458 d'un auxiliaire composé de 1,1-diméthylol-propane pour le broyage du clinker,
- et le procédé selon le brevet américain n°4711401 qui consiste à broyer un ciment hydraulique en présence d'un diester d'alkylène polyol.

Ces techniques ont pour inconvénient principal et commun d'être limitées au broyage du clinker de ciment.

S'agissant des matières dites crues, plus particulièrement de celles servant de matières premières dans la fabrication du clinker, les spécialistes dans ce domaine ont longtemps pensé que, du fait que les matières dites crues sont broyées à une dimension moins fine que les clinkers, le gain sur l'énergie de broyage serait faible si ils utilisaient un agent de mouture.

De ce fait, il existe, au jour d'aujourd'hui, seulement les techniques citées dans l'article de S. SOHONI (voir POWDER TECHNOLOGY, vol. 66, 1991, Lausanne, pages: 277-286) et dans l' article de W. SCHEIBE (voir SILIKATTECHNIK, vol 21, no 1, 1970, pages 11-17).

### EXPOSE SOMMAIRE DE L'INVENTION

La demanderesse a découvert un nouveau procédé d'amélioration du broyage des matières crues rendant possible l'obtention d'excellents résultats en termes de finesse des matières broyées et de diminution de l'énergie nécessaire au broyage. Ce procédé se caractérise en ce qu'on réalise le broyage des matières crues en présence d'un agent de broyage comprenant au moins un acide monocarboxylique à chaîne courte comportant moins de huit atomes de carbone, la quantité d'agent de broyage étant comprise entre 0,01% et 0,1% en poids par rapport au poids des matières crues, soit entre 100 et 1000 ppm ou grammes/tonne.

### EXPOSE DETAILLE DE L'INVENTION

Par minéraux, on entend dans la présente description, les matières inorganiques rencontrées dans la nature telles que le calcaire (en mélange généralement avec d'autres composés comme l'argile dans la marne), les schistes, les argiles, la bauxite, les minerais ou les mélanges de minéraux tels que les mélanges renfermant de la silice et/ou de l'alumine et/ou des oxydes de fer. En revanche, sont exclus de ces minéraux le verte et le gypse avec lesquels le procédé selon l'invention s'est avéré inefficace.

Par minéraux grossiers, on entend lesdits minéraux ayant déjà fait l'objet d'une première réduction de taille dans un concasseur de façon à présenter des dimensions jusqu'à quelques centimètres.

Le procédé selon l'invention s'applique particulièrement au broyage des matières crues servant à la fabrication du clinker de ciment constituées majoritairement de calcaires ou de marnes. Il comble ainsi efficacement une lacune existant depuis de nombreuses années dans l'état de la technique.

La ou les acides monocarboxyliques à chaîne courte utilisables lors du broyage selon l'invention sont des acides comportant moins de 8 atomes de carbone. Ce sont de préférablement les acides formique (méthanoique), acétique (éthanoique), propionique ou leurs mélanges. Ces acides ont l'avantage d'être performants, peu coûteux, très répandus dans le commerce et non-toxiques. Ainsi, il est en outre avantageux d'utiliser des sous-produits de l'industrie chimique, par exemple un acide résiduaire issu de la fabrication de l'acide acrylique contenant (hors l'eau) environ 1 % d'acide acrylique, 2 % d'acide propionique et titrant au moins 95 % en acide acétique.

De préférence, lors de la mise en oeuvre du procédé selon l'invention, l'agent de broyage contient également une ou plusieurs bases selon Brönsted. Parmi les bases pouvant convenir, on peut citer l'hydroxyde de sodium (soude), l'hydroxyde de potassium, la chaux (Ca(OH)₂), l'ammoniac et les composés aminés dont les groupes alkyles comportent tous moins de 10 atomes de carbone et leurs mélanges. Parmi ces composés aminés on peut citer les amines primaires, les amines secondaires, les polyamines, les mono ou polyalcanols-amines primaires ou secondaires comme la monoéthanolamine ou la diéthanolamine et leurs mélanges.

L'ammoniac et l'éthanolamine se révèlent particulièrement intéressantes quant à la qualité des résultats et quant à leur disponibilité dans le commerce.

Egalement, il est avantageux d'utiliser comme base des sous-produits de l'industrie chimique, par exemple les queues de distillation d'éthanolamines et de polyéthylèneamines.

Lors de la mise en oeuvre du procédé selon l'invention, il est souhaitable de faire appel à un agent de broyage introduisant, en pourcentages massiques rapportés à la masse totale de matériaux à broyer, entre 0,005% et 0,06% et de préférence entre 0,012% et 0,035% d'acide carboxylique mis en présence d'une base selon un taux de neutralisation de l'acide compris entre 0 et 1 (inclus), et de préférence entre 0,1 et 0,7 (inclus), car à ce dernier intervalle, le broyage est à la fois plus économique et performant.

Par taux de neutralisation, il faut ici comprendre le rapport molaire de base sur l'acide.

Conformément au procédé selon l'invention l'agent de broyage peut contenir un ou plusieurs additifs tels que :
- des colorants tels que les lignosulfonates de sodium, les polynaphtalènes sulfonates,
- des inhibiteurs de corrosion comme les phosphates de sodium, des nitrites de sodium,
- des agents de broyage conventionnels du ciment tels que des glycols,
- des agents parfumants.

Il est toutefois préférable de limiter la quantité d'additifs à 8% en poids par rapport à la masse totale de l'agent de broyage.

De préference, la quantité d'agent nécessaire à la mise en oeuvre du procédé selon l'invention est comprise entre 0,02% et 0,06% en matières actives. On définit les matières actives comme étant les acides carboxyliques et les bases. Si l'on souhaite effectuer un broyage plus poussé afin d'obtenir une plus grande surface spécifique des matériaux broyés, on emploie des quantités en matières actives situées parmi les valeurs les plus élevées de ces intervalles.

L'agent de broyage peut intervenir sous forme pure ou diluée dans un milieu aqueux ou un autre solvant, selon sa solubilité dans ces solvants. En pratique, il est mis en oeuvre sous forme de solution aqueuse, ce qui a l'avantage de permettre un dosage précis et une pulvérisation sur les matières à broyer. La concentration de la solution aqueuse ne joue quasiment aucun rôle car même lorsqu'on effectue un broyage à sec, la quantité d'eau apportée par l'agent de broyage est négligeable par rapport à celle présente dans les matières elles-mêmes qui peut atteindre des teneurs de l'ordre de 11%.

Selon l'invention, l'agent de broyage peut être mis en oeuvre par introduction à divers endroits tels que :
- à l'entrée du broyeur sur la matière concassée,
- directement à l'intérieur du broyeur,
- en tout point du circuit de broyage, sur de la matière ayant déjà effectué un passage dans le broyeur, ou
- à plusieurs de ces endroits simultanément.

Il n'est pas nécessaire que l'agent de broyage soit bien homogénéisé dans les matières à broyer pour obtenir de bons résultats.

Selon l'invention, le broyage peut être effectué en milieu sec ou en milieu humide. On qualifie d'habitude un milieu de sec lorsqu'on ne rajoute pas d'eau. La teneur massique en eau du milieu correspond alors à l'humidité naturelle des matières à broyer qui est presque toujours inférieure à 12%, et en général comprise entre 3 et 6%.

On qualifie habituellement un milieu de humide lorsque sa teneur massique en eau est supérieure à 30 %. Pour une farine de cru préparée par une voie humide, la teneur massique en eau peut varier entre 30 % et 60-70 %.

Cette particularité du procédé selon l'invention selon laquelle le broyage peut être effectué à sec ou au mouillé est étonnante lorsqu'on sait qu'il est beaucoup plus difficile d'éviter l'agglomération des matériaux broyés lors du broyage à sec que lors du broyage humide.

L'amélioration du broyage peut se manifester par l'augmentation du débit pour une puissance du broyeur donnée ou par une plus grande finesse des matériaux broyés.

La tableau suivant donne quelques exemples de compositions de matières crues auxquelles peut s'appliquer le procédé selon l'invention :

| **calcaire** | **argile** | **marne** | **sable** | **schiste** | **cendres** | **pyrite** | **bauxite** | **rejets lavoir** |
|---|---|---|---|---|---|---|---|---|
| 89 | 3 | | 8 | | | | | |
| 72 | 18 | 7 | | | 2,5 | | | 0,5 |
| 89 | 11 | | | | | | | |
| 80 | 14,7 | | 0,2 | 5 | | 0,1 | | |
| 68 | 10 | 20,3 | | | | | 1,7 | |
| 25 | 10,8 | 59,2 | 4,9 | | | | | |
| | 14 | 85 | | | | 1 | | |
| 92,9 | 3,1 | | | | | | 4 | |
| rejets lavoir = résidus d'ateliers de traitement de minerais. | | | | | | | | |

On trouvera maintenant dans les exemples ci-après, donnés à simple titre illustratif et non à titre limitatif, des exemples de mise en oeuvre du procédé selon l'invention.

### EXEMPLES

Las essais décrits dans les exemples 1 à 4 et 6 à 9 ont été réalisés dans un broyeur de laboratoire.

Las essais faisant l'objet de l'exemple 5 ont été effectués dans des broyeurs industriels.

La pourcentage de refus est déterminé par tamisage d'un échantillon du produit broyé de 10 g, à l'aide d'un tamiseur automatique du type Alpine et pesage de la matière restant sur un tamis normalisé.

### Exemple 1 :

3 agents de broyage ont été préparés : leur composition (en % massiques rapportés à la masse totale) est donnée dans le tableau A suivant :

**TABLEAU A**

| | AGENTS DE BROYAGE | | |
|---|---|---|---|
| COMPOSITION | 1 | 2 | 3 |
| acide acétique | 60 | 60 | 0 |
| acide propionique | 0 | 0 | 60 |
| ammoniaque (teneur en extrait sec) | 0 | 2,50 | 2,50 |
| eau | 40 | 37,50 | 37,50 |

### Exemple 2

Las agents de broyage de l'exemple 1 ont été introduits dans un cru de Lexos composé de 89% de calcaire, de 3% d'argile, et de 8% de sable, à raison de 1000 ppm (parties d'agent par million de parties en poids de cru). La granulométrie initiale du cru avant broyage est la suivante (en % massique en sec) :
. 0,16% supérieur à 2,5 mm
. 25,26% entre 1,25 et 2,5 mm
. 28,1% entre 0,63 et 1,25 mm
. 46,42 % inférieur à 0,63 mm.

On a mesuré le pourcentage de refus sur un tamis de 100 µm en fonction du nombre de tours du broyeur. La broyeur utilisé ici est du type à boulets chauffant (à environ 100°C), comportant une charge broyante de 60 kg constituée de boulets de diamètre compris entre 20 et 60 mm, pour une charge broyée d'environ 5 kg. C'est un cylindre de 60 cm de diamètre et de 50 cm de long ayant une vitesse de rotation de 40 tours/min.

Las résultats sont regroupés dans le tableau B suivant (le témoin est l'essai où aucun agent de broyage n'a été introduit) :

**TABLEAU B**

| | AGENTS DE BROYAGE | | | |
|---|---|---|---|---|
| nombres de tours | témoin | 1 | 2 | 3 |
| 100 | 70,1 | 69,7 | 70,3 | 70,8 |
| 200 | 59,3 | 59,8 | 59,4 | 59,7 |
| 300 | 48,9 | 48 | 48,2 | 47,3 |
| 400 | 37,3 | 35,7 | 33,1 | 32,7 |
| 500 | 27,4 | 25,1 | 23,8 | 21,9 |
| 600 | 19,5 | 17 | 14,8 | 14,3 |
| 700 | 14,4 | 11,7 | 10,3 | 9,9 |
| 800 | 11 | 8,9 | 7,6 | 7,2 |

### Exemple 3

Des essais ont été effectués sur un cru composé d'environ 89% de calcaire et 11% d'argile. La granulométrie initiale de ce cru est sensiblement la même que celle du cru de l'exemple 2. Las teneurs en agents de broyage mis en oeuvre étaient d'environ 1000 ppm des compositions ci-dessous.

Las compositions des agents de broyage (en % massiques) sont résumées dans le tableau suivant :

| | **AGENTS DE BROYAGE** | | | | | |
|---|---|---|---|---|---|---|
| **COMPOSITION** | **A** | **B** | **C** | **D** | **E** | **F** |
| acide acétique | 60 | 60 | - | 60 | - | 60 |
| acide propionique | - | - | - | - | 74,1 | - |
| ammoniaque à 30% | - | 8 | 7,9 | | 18,45 | - |
| monoéthanol | - | - | - | 19,85 | - | - |
| amine | | | | | | |
| soude | - | - | - | - | - | 5,6 |
| eau | 40 | 28,5 | 92,1 | 20,15 | 7,45 | 34,4 |
| additifs | - | 3,5 (1) | - | - | - | - |

| | | | | | | |
|---|---|---|---|---|---|---|
| (1) : 2,5% de résidus sulfatés de fabrication de polynaphtalène sulfonate de sodium et 1% de lignosulfonate en solution aqueuse à 40%. | | | | | | |

T désigne l'essai réalisé sans agent de broyage (broyage témoin)

L'agent C a été utilisé uniquement à titre comparatif car il ne comprend pas d'acide carboxylique et ne permet donc pas de mettre en oeuvre le procédé selon l'invention.

Las résultats des essais sont regroupés dans les tableaux suivants :

| | **% de REFUS à 40 µm** | | | | | | |
|---|---|---|---|---|---|---|---|
| **nombre de tours** | **T** | **A** | **B** | **C** | **D** | **E** | **F** |
| **100** | 69,8 | 69,8 | 68,8 | 69,8 | 69,4 | 69,0 | 68,6 |
| **200** | 53,4 | 54,2 | 55,5 | 55,7 | 54,6 | 55,1 | 53,9 |
| **300** | 46,5 | 48,8 | 44,4 | 48,1 | 44,4 | 44,0 | 44,4 |
| **400** | 40,1 | 45,7 | 37,6 | 40,2 | 37,6 | 36,9 | 37,5 |
| **500** | 36,2 | 33,0 | 32,9 | 36,6 | 33,0 | 32,0 | 33,2 |
| **600** | 34,9 | 30,2 | 29,2 | 33,9 | 28,9 | 27,9 | 29,8 |
| **700** | 31,9 | 27,9 | 26,4 | 33,2 | 25,5 | 24,5 | 27,4 |
| **800** | 28,6 | 26 | 25,6 | 31,5 | 22,0 | 21,9 | 25,2 |

| | **% de REFUS à 63 µm** | | | | | | |
|---|---|---|---|---|---|---|---|
| **nombre de tours** | **T** | **A** | **B** | **C** | **D** | **E** | **F** |
| **100** | 64,4 | 64,7 | 64,1 | 64,9 | 63,8 | 63,3 | 63,3 |
| **200** | 46,6 | 46,3 | 48,0 | 48,1 | 46,5 | 47,2 | 45,9 |
| **300** | 38,0 | 39,4 | 34,4 | 38,5 | 35,5 | 34,9 | 35,3 |
| **400** | 30,9 | 33,2 | 27,9 | 31,2 | 27,6 | 26,9 | 27,5 |
| **500** | 25,5 | 22,8 | 22,5 | 26,9 | 22,5 | 21,4 | 22,7 |
| **600** | 24,5 | 19,6 | 18,6 | 24,1 | 18,4 | 17,6 | 19,6 |
| **700** | 21,8 | 17,8 | 16,1 | 22,8 | 15,1 | 14,3 | 16,9 |
| **800** | 19,3 | 15,3 | 14,9 | 21,5 | 13,2 | 12,1 | 15,1 |

| | **% de REFUS à 80 µm** | | | | | | |
|---|---|---|---|---|---|---|---|
| **nombre de tours** | **T** | **A** | **B** | **C** | **D** | **E** | **F** |
| **100** | 57,7 | 57,7 | 55,4 | 58,3 | 57,0 | 56,3 | 56,6 |
| **200** | 38,1 | 37,0 | 37,6 | 39,2 | 37,1 | 37,7 | 36,2 |
| **300** | 27,2 | 26,8 | 224,8 | 27,8 | 24,5 | 23,8 | 24,8 |
| **400** | 19,8 | 20,2 | 16,7 | 20,3 | 16,7 | 15,8 | 16,4 |
| **500** | 14,8 | 11,9 | 11,5 | 15,8 | 11,4 | 11,1 | 11,9 |
| **600** | 12,7 | 9,1 | 8,6 | 13,4 | 8,4 | 7,7 | 9,0 |
| **700** | 11,0 | 7,5 | 6,3 | 12,0 | 6,1 | 5,4 | 7,2 |
| **800** | 9,5 | 6,0 | 5,5 | 11,1 | 4,4 | 4,1 | 5,9 |

| | **% de REFUS à 100 µm** | | | | | | |
|---|---|---|---|---|---|---|---|
| **nombre de tours** | **T** | **A** | **B** | **C** | **D** | **E** | **F** |
| **100** | 52,3 | 52,3 | 49,9 | 52,7 | 51,4 | 50,6 | 51,0 |
| **200** | 30,7 | 29,9 | 29,8 | 31,5 | 29,2 | 30,0 | 28,0 |
| **300** | 18,5 | 17,8 | 15,6 | 20,3 | 16,2 | 15,9 | 16,2 |
| **400** | 11,6 | 10,8 | 9,1 | 12,0 | 9,3 | 8,4 | 8,7 |
| **500** | 7,7 | 5,5 | 5,2 | 8,2 | 5,1 | 4,9 | 4,1 |
| **600** | 5,8 | 3,5 | 3,5 | 6,3 | 3,4 | 2,6 | 3,7 |
| **700** | 4,8 | 2,8 | 2,2 | 5,3 | 2,0 | 1,7 | 2,5 |
| **800** | 3,9 | 2,1 | 1,8 | 5,0 | 1,4 | 1,3 | 2,0 |

| | **% de REFUS à 200 µm** | | | | | | |
|---|---|---|---|---|---|---|---|
| **nombre de tours** | **T** | **A** | **B** | **C** | **D** | **E** | **F** |
| **100** | 33,9 | 33,3 | 29,9 | 34,2 | 31,4 | 30,9 | 32,3 |
| **200** | 9,2 | 7,4 | 7,4 | 9,2 | 7,1 | 7,6 | 6,2 |
| **300** | 1,8 | 1,5 | 1,3 | 2,3 | 1,3 | 1,3 | 1,4 |
| **400** | 0,5 | 0,4 | 0,3 | 0,7 | 0,3 | 0,3 | 0,3 |
| **500** | 0,2 | 0,1 | 0,2 | 0,2 | 0,2 | 0,1 | 0,2 |
| **600** | 0,2 | 0,1 | 0,1 | 0,2 | 0,1 | 0,1 | 0,1 |
| **700** | 0,2 | 0,1 | 0,1 | 0,2 | 0,1 | 0,1 | 0,1 |
| **800** | 0,2 | 0,2 | 0,1 | 0,4 (agglomération) | 0,1 | 0,1 | 0,1 |

On peut donc tirer des tableaux qui précédent les conclusions suivantes :
- la mise oeuvre des agents A, B, D, E, F selon l'invention entraîne une amélioration très nette par rapport au broyage témoin,
- l'agent C qui ne comprend pas d'acide carboxylique conduit à des résultats négatifs, c'est-à-dire moins bons que ceux obtenus lors du broyage témoin,
- le broyage avec un acide partiellement neutralisé a donné des résultats supérieurs à ceux obtenus avec un acide non neutralisé.

### Exemple 4

On a réalisé le broyage d'un cru humide en provenance du Gabon composé environ de (en % massique sur la masse totale) :
- 14 % de calcaire pur,
- 70 % de matières calco-marneuses,
- 15 % d'argile,
- 1 à 1,5 % de latérite ou minerai de fer
contenant 33 % d'eau, avec et sans agent de broyage.

L'agent de broyage employé était composé de 37,5% d'acide acétique à 80 %, 30% d'acide citrique, 8% d'ammoniaque en solution aqueuse à 30%, 3% d'agent de broyage conventionnel, 1% de lignosulfate de sodium en solution aqueuse à 40% et 20,5% d'eau.

Las pourcentages de refus mesurés avant et après séchage de la matière ayant subi un broyage pendant 800 tours sont donnés dans le tableau suivant en fonction du diamètre du tamis :

| | Résultats avant séchage | | Résultats après séchage | | | | |
|---|---|---|---|---|---|---|---|
| | % de refus | | % de refus | | | | |
| | 80 µm | 100 µm | 80 µm | 100 µm | 45 µm | 63 µm | 200µm |
| sans agent de broyage | 2,2 | 0,9 | 1,90 | 0,85 | 9,25 | 3,05 | 0,25 |
| avec agent de broyage dosé à 900 ppm | 1,5 | 0,5 | 1,35 | 0,35 | 6,15 | 2,21 | 0,10 |

### Exemple 5

Las essais présentés dans cet exemple ont été effectués sur un cru composé environ de 80% de calcaire, 14,7% d'argile, 0,2% de sable et 0,1% de matières contenant du minerai de fer.

La granulométrie initiale du cru est la suivante (en % en poids sec) :
. 2,1% supérieur à 20 mm,
. 20,1% entre 10 et 20 mm,
. 18,1% entre 5 et 10 mm,
. 20,3% entre 2 et 5 mm,
. 26,9 % entre 2 mm et 315 microns,
. 8,7 % entre 80 et 315 microns,
. 3,7 % inférieur à 80 microns.

Las broyeurs industriels utilisés sont des broyeurs-sécheurs du type birotateurs à boulets, de dénomination commerciale POLYSIUS, couplé à un séparateur statique et à un séparateur dynamique. Las caractéristiques de ces broyeurs-sécheurs sont les suivantes :

| | |
|---|---|
| diamètre | 3,80 m |
| longueur | 10,80 m |
| puissance | 1600 KW |
| vitesse de rotation | 15 tr/min |
| charge de boulets de diamètres entre 20 et 90 mm : 100 t | |

La procédé selon l'invention a été mis en oeuvre par introduction des agents de broyage sur les rejets du séparateur renvoyés dans le deuxième compartiment du broyeur.

Las compositions des agents de broyage sont indiquées dans le tableau suivant :

| | AGENTS DE BROYAGE | | |
|---|---|---|---|
| Composition | G | H | I |
| acide acétique en solution aqueuse à 80% | 75 | 37,5 | 56,25 |
| acide citrique (1) | - | 30 | 15 |
| ammoniaque à 30% | 8 | 8 | - |
| additifs | 4 (2) | 4 (2) | 4 (2) |
| eau | 13 | 20,5 | 24,75 |

| | | | |
|---|---|---|---|
| (1) : acide citrique monohydraté | | | |
| (2) : 3% d'agent de broyage conventionnel à base de glycols et 1 % de lignosulfonate de sodium en solution aqueuse à 40% | | | |

Quatre séries de mesure ont été effectuées par suivi informatique et enregistrement des paramètres de marche de deux broyeurs.

Las moyennes des valeurs obtenues sur plusieurs heures de fonctionnement en régime stabilisé sont regroupées dans les tableaux suivants. La tableau III concerne un résultat obtenu sur un autre broyeur du même type que celui ayant conduit aux résultats des tableaux I et II.

Las notations suivantes ont été utilisées :
- **D** représente le débit en tonnes/heure de minéraux à travers le broyeur,
- **Δ D** représente la variation de débit D par rapport à un fonctionnement de référence sans agent de broyage,
- **refus 100 µm, refus 200 µm** correspondent au pourcentage de refus sur le tamis à 100 µm et 200 µm,
- **écoute** représente le niveau sonore exprimé en %,
- **W** représente la puissance électrique nécessaire au fonctionnement de l'élévateur exprimée en KW,
- **Δ W** représente la variation de puissance W par rapport au fonctionnement de référence sans agent de broyage.

**TABLEAU I**

| | AGENTS DE BROYAGE ET DOSAGE | | | |
|---|---|---|---|---|
| | inexistant | G 800 ppm | H 1000 ppm | I 1000 ppm |
| D | 140 | 158,5 | 153,3 | 156,8 |
| Δ D | - | + 13,2% | + 9,4% | + 12% |
| refus 100 µ | 14,1 | 13,4 | 14,8 | 13,8 |
| refus 200 µ | 2,4 | 2,4 | 2,6 | 2,7 |
| écoute | 58,4 | 60,6 | 63,9 | 64,7 |
| W | 40,1 | 26,9 | 28,3 | 25,8 |
| Δ W | - | - 30,7% | - 29,4% | - 35,8% |

Il est souhaitable de procéder à l'introduction de l'agent de broyage lentement afin d'éviter les phénomènes de bourrage. En effet, dès l'introduction de l'agent de broyage dans le broyeur, on assiste à une augmentation rapide du débit. L'action de l'agent de broyage est donc immédiate.

**TABLEAU II**

| | AGENTS DE BROYAGE ET DOSAGE | | |
|---|---|---|---|
| | inexistant | G 400 ppm | G modifié (1) 600 ppm |
| D | 149,2 | 167,9 | 165,5 |
| Δ D | - | + 12,5% | + 10,9% |
| refus 100 µ | | 12,8 | 13,5 |
| refus 200 µ | | 2 | 2,5 |
| écoute | 63,4 | 61,7 | 59,2 |
| W | 37,3 | 30,6 | 27,8 |
| Δ W | - | - 18% | - 25,4% |

| | | | |
|---|---|---|---|
| (1) : G modifié est l'agent G contenant environ 1 % d'un agent parfumant à odeur citronnée, de dénomination commerciale GLF 02278 de la société LOTIER FLORAS SYNTHESE, remplaçant partiellement l'eau. | | | |

**TABLEAU III**

| AGENTS DE BROYAGE ET DOSAGE | | |
|---|---|---|
| | inexistant | G 400 ppm |
| D | 132 | 146,5 |
| Δ D | - | + 11% |
| refus 100 µ | 16,2 | 15 |
| refus 200 µ | 2 | 2,7 |
| écoute | 59,4 | 58,9 |
| W | 44,5 | 33,8 |
| Δ W | - | - 24% |

Les tableaux I à III montrent que le passage d'un dosage de 1000 ppm à un dosage de 400 ppm n'a pas entrainé de diminution notable des performances du broyeur.

A cet égard, il faut noter que les dosages donnés pour les essais en laboratoire sont de 1000 ppm (cf. exemples 1 à 4 et 6). Ces valeurs sont volontairement élevées pour accentuer les effets en laboratoire et permettre la sélection des produits. Il s'avère que dans l'utilisation pratique (cf. exemple 5 = est dans un broyeur industriel), les doses nécessaires à l'efficacité de l'agent de broyage sont plus faibles : 600 et 400 ppm.

Il est surprenant de constater que des valeurs si faibles, inférieures à 500 ppm, puissent conduire à une gain en débit de l'ordre de 11 %.

### Exemple 6:

Cet exemple est destiné à illustrer l'économie d'énergie que le procédé selon l'invention permet de réaliser. Dans un broyeur de laboratoire du type de celui décrit dans l'exemple 2, on a procédé au broyage du cru de l'exemple 5, après concassage de sorte à ramener la granulométrie initiale du cru à des valeurs similaires à celles des crus des exemples 2 et 3. Le broyage a été réalisé dans un premier temps sans agent de broyage et dans un second temps avec un agent de broyage correspondant à la composition B de l'exemple 3.

Le tableau suivant permet de comparer les résultats obtenus dans l'un et l'autre cas.

| | TEMOIN | AGENT de broyage 1000 ppm |
|---|---|---|
| nombre de tours | % Refus à 100µ | % Refus à 100µ |
| 100 | 63,9 | 66 |
| 200 | 55,4 | 52 |
| 300 | 44,9 | 40,7 |
| 400 | 35,8 | 29,2 |
| 500 | 27,9 | 20,6 |
| 600 | 22,7 | 14,2 |
| 700 | 20,3 | 10,4 |
| 800 | 18,2 | - |
| 900 | 17,1 | - |
| 1000 | 15,8 | - |
| 1100 | 14,7 | - |
| 1200 | 14 | - |
| 1300 | 13,4 | - |
| 1400 | 12,8 | - |
| 1500 | 12,5 | - |
| 1600 | 11,8 | - |

Il apparaît donc clairement que lorsque l'on met en oeuvre le procédé selon l'invention, le nombre de tours de broyeurs nécessaire à l'obtention d'un même pourcentage de matière, de granulométrie supérieure à 100 µm, est beaucoup plus faible avec un agent de broyage.

Ce qui peut se formuler des deux manières suivantes :
- il y a une amélioration de la finesse à énergie constante
- il y a augmentation du débit à finesse constante.

Par exemple, lors de la mise en oeuvre du procédé selon l'invention, pour parvenir à un pourcentage de refus de 14% environ, seuls 600 tours de broyeur environ ont été nécessaires. Lors du broyage sans agent (broyage témoin), il a fallu environ 1200 tours de broyeur pour arriver au même pourcentage. Sachant que le broyeur fonctionne avec une vitesse de rotation de 40 tours/mn, le gain de temps (corrélable au gain en énergie) réalisé grâce au procédé selon l'invention est dans ce cas précis de 15 minutes.

### Exemple 7

Cet exemple est destiné à illustrer l'influence du taux de neutralisation (tx) de l'acide sur l'efficacité du broyage.

Dans un broyeur de laboratoire du type de celui décrit dans l'exemple 2, on a procédé au broyage du cru de l'exemple 6 avec différents agents de broyage.

Les résultats obtenus sont reportés dans le tableau qui suit :

| | K | L | M | N | N | O | K |
|---|---|---|---|---|---|---|---|
| dosage | 1000 ppm | 1000 ppm | 2000 ppm | 2000 ppm | 1000 ppm | 1000 ppm | 2000 ppm |
| nbr tours | | | | | | | |
| 100 | 63,8 | 65,2 | 64,2 | 62,9 | 65,3 | 64,4 | 64,8 |
| 200 | 52,6 | 53 | 51,6 | 49,1 | 52,9 | 52,1 | 50,3 |
| 300 | 38,7 | 37,3 | 37,1 | 34 | 38,3 | 38,3 | 35,2 |
| 400 | 27,3 | 23,5 | 24,7 | 20,3 | 26,8 | 26 | 21,5 |
| 500 | 17,9 | 15,8 | 14,4 | 13 | 17,6 | 17,2 | 12,9 |
| 600 | 12,5 | 9,8 | 8,7 | 7,5 | 11,9 | 11,2 | 7,8 |
| 700 | 9,4 | 6,7 | 5,4 | 4,7 | 9,3 | 7,9 | 5,1 |
| 800 | 7,5 | 5,1 | 3,4 | 2,7 | 7,1 | 6 | 3 |
| ppm acide | 600 | 600 | 600 | 600 | 300 | 300 | 1200 |
| ppm base | 0 | 61 | 305 | 550 | 275 | 305 | 0 |
| tx | 0 | 0,1 | 0,5 | 0,9 | 0,9 | 1 | 0 |
| K = 60% acide acétique dans l'eau L = 60% acide acétique, + 6,1% monoéthanolamine (MEA) dans l'eau M = 30% acide acétique + 15,25 % MEA dans l'eau N = 30% acide acétique + 27,5% MEA dans l'eau O = 30% acide acétique + 30,5 % MEA dans l'eau | | | | | | | |

Dans les 4 premières colonnes on voit qu'à masse d'acide introduite identique, plus on neutralise le produit, plus il est efficace.

A masse de produit introduit équivalente, on obtient de meilleurs résultats avec un produit neutralisé.

### Exemple 8

Cet exemple est destiné à illustrer l'efficacité d'un agent de mouture de l'invention sur une matière première qui est plus difficile à broyer que les matières dites crues servant de matières premières dans la fabrication du clinker.

Il s'agit de granulats normalisés pour des essais sur du béton qui sont constitués d'environ 75% de silice.

Dans un broyeur de laboratoire du type de celui décrit dans l'exemple 2, on a procédé au broyage de ces granulats. Après 800 tours de broyeur, le pourcentage de refus sur un tamis de 100 microns est de 53,6 pour le témoin sans agent de mouture et de 49,3 pour le produit adjuvanté de 1000 ppm de l'agent de mouture B décrit dans l'exemple 3.

### Exemple 9

Cet exemple est destiné à illustrer l'efficacité d'un agent de mouture de l'invention sur une matière première qui est la latérite. Cette matière première est composée de 55 % de silice, 18 % d'oxydes de fer, 15 % d'alumine et d'oxydes de Ti, Na, K, Mg, Mn et Ca.

Sa granulométrie initiale est la suivante :
- 0,5 % entre 2,5 mm et 3,15 mm
- 29,9 % entre 1,25 mm et 2,5 mm
- 19,7 % entre 315 µm et 1,25 mm
- 37,7 % entre 80 µm et 315 µm
- 12,2 % inférieur à 80 µm

Dans un broyeur de laboratoire de type de celui décrit dans l'exemple 2, on a procédé au broyage de cette matière première. L'agent de broyage correspond à la composition B décrite dans l'exemple 3. Les résultats obtenus sont reportés dans le tableau qui suit :

| **Refus 100 µm** | témoin | **B** |
|---|---|---|
| nbr tours | | 1000 ppm |
| 100 | 69,2 | 66,9 |
| 200 | 60,3 | 56,8 |
| 300 | 51,2 | 47,8 |
| 400 | 43 | 39,1 |
| 500 | 34,9 | 30,4 |
| 600 | 27,8 | 23 |
| 700 | 21,6 | 16 |
| 800 | 16,2 | 10,9 |

### Exemple 10

Cet exemple est destiné à illustrer la supériorité des acides monocarboxyliques par rapport aux acides polycarboxyliques.

Les agents de broyage, dont la composition exprimée en pourcentages massiques est donnée dans le tableau suivant, ont été testés.

| | **AGENTS DE BROYAGE** | | | | | |
|---|---|---|---|---|---|---|
| **COMPOSITION** | **P** | **Q** | **R** | **S** | **U** | **V** |
| acide acétique | 60,0 | - | 50,0 | - | 60,0 | - |
| acide maléique (HO2CCH=CHCO2H) | - | 60,0 | - | - | - | - |
| acide malique (HO2CCH(OH)CH2CO2H) | - | - | - | 50,0 | - | - |
| acide citrique | - | - | - | - | - | 50,0 |
| ammoniaque (teneur en extrait sec) | 2,4 | 1,2 | - | - | - | - |
| eau | 37,6 | 38,8 | 50 | 50 | 40,0 | 50,0 |

### a) Broyage du cru de Val d'Azergues

La composition du cru de Val d'Azergues est celle indiquée à l'exemple 3.

L'évolution des pourcentages de refus sur différents tamis, pour l'agent P dosé à 1000 ppm, l'agent Q dosé à 2000 ppm a été mesurée en fonction du nombre de tours effectués par le broyeur.

Les résultats sont regroupés dans les tableaux suivants, où T désigne les résultats obtenus en l'absence d'agent de broyage :

| | **% de REFUS à 40 µm** | | |
|---|---|---|---|
| **nombre de tours** | **T** | **P** | **Q** |
| **100** | 69,8 | 68,8 | 69,5 |
| **200** | 53,4 | 55,5 | 56,7 |
| **300** | 46,5 | 44,4 | 46,7 |
| **400** | 40,1 | 37,6 | 40,2 |
| **500** | 36,2 | 32,9 | 36,6 |
| **600** | 34,9 | 29,2 | 33,9 |
| **700** | 31,9 | 26,4 | 32,0 |
| **800** | 28,6 | 25,6 | 30,4 |

| | **% de REFUS à 63 µm** | | |
|---|---|---|---|
| **nombre de tours** | **T** | **P** | **Q** |
| **100** | 64,4 | 64,1 | 64,6 |
| **200** | 46,6 | 48,0 | 49,2 |
| **300** | 38,0 | 34,4 | 38,1 |
| **400** | 31,0 | 27,9 | 31,0 |
| **500** | 25,5 | 22,5 | 26,7 |
| **600** | 24,5 | 18,6 | 23,8 |
| **700** | 21,8 | 16,1 | 22,7 |
| **800** | 19,3 | 14,9 | 20,6 |

| | **% de REFUS à 80 µm** | | |
|---|---|---|---|
| **nombre de tours** | **T** | **P** | **Q** |
| **100** | 57,7 | 55,4 | 58,3 |
| **200** | 38,1 | 37,6 | 40,1 |
| **300** | 27,2 | 24,8 | 27,6 |
| **400** | 19,8 | 16,7 | 19,9 |
| **500** | 14,8 | 11,5 | 15,5 |
| **600** | 12,7 | 8,6 | 13,0 |
| **700** | 11,0 | 6,3 | 11,5 |
| **800** | 9,5 | 5,5 | 10,3 |

| | **% de REFUS à 100 µm** | | |
|---|---|---|---|
| **nombre de tours** | **T** | **P** | **Q** |
| **100** | 52,3 | 49,9 | 53,5 |
| **200** | 30,7 | 29,8 | 32,7 |
| **300** | 18,5 | 15,6 | 19,3 |
| **400** | 11,6 | 9,1 | 11,9 |
| **500** | 7,7 | 5,2 | 8,0 |
| **600** | 5,8 | 3,5 | 6,1 |
| **700** | 4,8 | 2,2 | 4,7 |
| **800** | 3,9 | 1,8 | 4,4 |

| | **% de REFUS à 200 µm** | | |
|---|---|---|---|
| **nombre de tours** | **T** | **P** | **Q** |
| **100** | 33,9 | 29,9 | 35,3 |
| **200** | 9,2 | 7,4 | 10,3 |
| **300** | 1,8 | 1,3 | 2,2 |
| **400** | 1,0 | 0,3 | 0,5 |
| **500** | 0,2 | 0,2 | 0,3 |
| **600** | 0,2 | 0,1 | 0,3 |
| **700** | 0,2 | 0,1 | 0,3 |
| **800** | 0,2 | 0,1 | 0,3 |

### b) Broyage du cru de Saint-Pierre La Cour

La composition du cru de Saint-Pierre la Cour est celle indiquée à l'exemple 5.

Les pourcentages de refus à 100 µm ont été mesurés pour les agents R, S, U ,et V. Les résultats sont regroupés dans les tableaux suivants, où T désigne les résultats obtenus en l'absence d'agent de broyage :

| | **% de REFUS à 100 µm** | |
|---|---|---|
| **nombre de tours** | **R dosé à 1000 ppm** | **S dosé à 2000 ppm** |
| **100** | 63,8 | 65,0 |
| **200** | 52,6 | 55,0 |
| **300** | 38,7 | 44,5 |
| **400** | 27,3 | 33,7 |
| **500** | 17,9 | 26,7 |
| **600** | 12,5 | 21,8 |
| **700** | 9,4 | 19,6 |
| **800** | 7,5 | 18,3 |

| | **% de REFUS à 100 µm** | | |
|---|---|---|---|
| **nombre de tours** | **T** | **U dosé à 1000 ppm** | **V dosé à 2000 ppm** |
| **100** | 65,9 | 65,8 | 66,1 |
| **200** | 55,0 | 51,4 | 55,5 |
| **300** | 46,3 | 39,1 | 46,0 |
| **400** | 35,9 | 26,1 | 36,3 |
| **500** | 28,9 | 17,1 | 28,4 |
| **600** | 23,6 | 10,9 | 22,7 |
| **700** | 19,7 | 7,0 | 20,1 |
| **800** | 18,5 | 4,9 | 17,1 |

### Exemple 11

Dans cet exemple on a testé en usine un agent de broyage W comportant un acide carboxylique à chaîne longue.

La composition de l'agent de broyage W exprimée en pourcentages massiques était la suivante :

| | |
|---|---|
| . acide oléique | 7% |
| . potasse (KOH) | 1,4% |
| . butylène-glycol | 2% |
| . lignosulfonate de sodium | 3% |
| . eau | 86,6% |

Les broyeurs industriels utilisés étaient ceux indiqués à l'exemple 5.

L'usine fonctionnait en ligne directe : à la sortie des broyeurs était effectuée une granulation puis les granules obtenus étaient introduits dans un four pour y subir la cuisson nécessaire à l'obtention du clinker.

La quantité d'agent de broyage était de 1500ppm.

Des perturbations sont apparues au niveau de la granulation : les granules devenaient friables.

Au moment de la précalcination on a également noté que les granules éclataient et se pulvérisaient. Une élévation de l'émission de monoxyde de carbone CO à été observée ainsi qu'une augmentation de la teneur en chaux libre du clinker (d'une valeur de 1% avant l'introduction de l'agent W, on est passé à une valeur atteignant 4%).

Les problèmes provoqués par l'agent W ont donc montré que les résultats étaient meilleurs en l'absence de l'agent W et ont conduit à l'élimination de la famille importante de produits qu'est celle des composés à chaîne grasse à caractère hydrophobe.

## Revendications

1. Procédé d'amélioration du broyage des matières crues dans lequel on réalise le broyage des matières crues en présence d'un agent de broyage comprenant au moins un acide monocarboxylique caractérisé en ce que ledit acide monocarboxylique est un acide monocarboxylique à chaîne courte comportant moins de huit atomes de carbone et en ce que la quantité d'agent de broyage est comprise entre 0,01% et 0,1% en poids par rapport au poids des matières crues, soit entre 100 et 1000 ppm ou grammes/tonne.

2. Procédé selon la revendication 1, caractérisé en ce que l'acide monocarboxylique à chaîne courte est choisi dans le groupe constitué par l'acide formique, l'acide acétique, l'acide propionique et leurs mélanges.

3. Procédé selon la revendication 1 ou la revendication 2, caractérisé en ce que ledit agent de broyage comprend en outre au moins une base selon Brönsted.

4. Procédé selon la revendication 3, caractérisé en ce que ladite bas est choisie dans le groupe constitué par l'hydroxyde de sodium, l'hydroxyde de potassium, la chaux, l'ammoniac, les composés aminés dont les groupes alkyles comportent tous moins de 10 atomes de carbone et leurs mélanges.

5. Procédé selon la revendication 4, caractérisé en ce que lesdits composés aminés sont choisis dans le groupe constitué par les amines primaires, les amines secondaires, les polyamines, les alcanol-amines primaires, les alcanol-amines secondaires et leurs mélanges.

6. Procédé selon la revendication 5, caractérisé en ce que le composé aminé est la monoéthanolamine.

7. Procédé selon l'une quelconque des revendications 1 à 6, caractérisé en ce que ledit agent de broyage introduit, en pourcentages massiques rapportés à la masse totale des matières à broyer, entre 0,005% et 0,06% et de préférence entre 0,012% et 0,035% d'acide carboxylique mis en présence d'une base selon un taux de neutralisation de l'acide compris entre 0 et 1 (inclus).

8. Procédé selon la revendication 7, caractérisé en ce que le taux de neutralisation de l'acide est compris entre 0,1 et 0,7 (inclus).

9. Procédé selon l'une quelconque des revendications 1 à 8, caractérisé en ce que ledit agent de broyage comprend en outre de l'eau.

10. Procédé selon l'une quelconque des revendications 1 à 9, caractérisé en ce que ledit agent de broyage comprend en outre un ou plusieurs additifs.

11. Procédé selon la revendication 10, caractérisé en ce que ledit additif est choisi dans le groupe constitué par les colorants, les inhibiteurs de corrosion, les agents parfumants, les agents de broyage conventionnels et leurs mélanges.

12. Procédé selon l'une quelconque des revendications 1 à 11, caractérisé en ce que la quantité d'additif est inférieure à 8%.

13. Procédé selon l'une quelconque des revendications 1 à 12 caractérisé en ce que ledit agent de broyage est mis en oeuvre à raison de 0,02% à 0,06% en matières actives par rapport au poids desdites matières crues.

14. Procédé selon l'une quelconque des revendications 1 à 13, caractérisé en ce que ledit agent de broyage est mis en oeuvre par introduction :
- à l'entrée du broyeur sur la matière concassée,
- directement à l'intérieur du broyeur,
- en tout point du circuit de broyage, sur de la matière ayant déjà effectué un passage dans le broyeur,
- ou à plusieurs de ces endroits simultanément.

15. Procédé selon l'une quelconque des revendications 1 à 14, caractérisé en ce que les matières crues à broyer sont essentiellement composés de calcaire ou de marne.

16. Procédé selon l'une quelconque des revendications 1 à 15, caractérisé en ce que le broyage est effectué en milieu sec ou humide.

## Claims

1. Process for improving the grinding of raw materials, in which the raw materials are ground in the presence of a grinding agent comprizing at least one monocarboxylic acid, characterized in that the said monocarboxylic acid is a short-chain monocarboxylic acid containing less than eight carbon atoms and in that the amount of grinding agent is between 0.01% and 0.1% by weight with respect to the weight of the raw materials, i.e. between 100 and 1000 ppm or grams/tonne.

2. Process according to Claim 1, characterized in that the short-chain monocarboxylic acid is chosen from the group consisting of formic acid, acetic acid, propionic acid and their mixtures.

3. Process according to Claim 1 or Claim 2, characterized in that the said grinding agent additionnally comprises at least one Brönsted base.

4. Process according to Claim 3, characterized in that the said base is chosen from the group consisting of sodium hydroxide, potassium hydroxide, lime, ammonia, amino compounds in which the alkyl groups all contain less than 10 carbon atoms and their mixtures.

5. Process according to Claim 4, characterized in that the said amino compounds are chosen from the group consisting of primary amines, secondary amines, polyamines, primary alkanolamines, secondary alkanolamines and their mixtures.

6. Process according to Claim 5, characterized in that the amino compound is monoethanolamine.

7. Process according to any one of Claims 1 to 6, characterized in that the said grinding agent introduces, in percentages by mass with respect to the total mass of the materials to be ground, between 0.005% and 0.06%, and preferably between 0.012% and 0.035%, of carboxylic acid, brought together with a base according to a degree of neutralization of the acid of between 0 and 1 (inclusive).

8. Process according to Claim 7, characterized in that the degree of neutralization of the acid is between 0.1 and 0.7 (inclusive).

9. Process according to any one of Claims 1 to 8, characterized in that the said grinding agent additionally comprises water.

10. Process according to any one of Claims 1 to 9, characterized in that the said grinding agent additionally comprises one or several additives.

11. Process according to Claim 10, characterized in that the said additive is chosen from the group consisting of dyes, corrosion inhibitors, fragrances, conventional grinding agents and their mixtures.

12. Process according to any one of Claims 1 to 11, characterized in that the amount of additive is less than 8%.

13. Process according to any one of Claims 1 to 12, characterized in that the said grinding agent is used in a proportion of 0.02% to 0.06% of active materials with respect to the weight of the said raw materials.

14. Process according to any one of Claims 1 to 13, characterized in that the said grinding agent is used by introduction:
- at the grinder inlet on the crushed material,
- directly inside the grinder,
- at any point of the grinding circuit, on material which has already passed through the grinder,
- or at several of these places simultaneously.

15. Process according to any one of Claims 1 to 14, characterized in that the raw materials to be ground are composed essentially of limestone or of marl.

16. Process according to any one of Claims 1 to 15, characterized in that the grinding is carried out in a dry or wet medium.

## Patentansprüche

1. Verfahren zur Verbesserung des Mahlens von Rohmaterialien, bei dem man das Mahlen der Rohmaterialien in Gegenwart eines mindestens eine Monocarbonsäure enthaltenden Mahlhilfsmittels durchführt, dadurch gekennzeichnet, daß die genannte Monocarbonsäure eine kurzkettige, weniger als acht Kohlenstoffatome enthaltende Monocarbonsäure ist und daß die Menge des Mahlhilfsmittels im Verhältnis zu den Rohmaterialien zwischen 0,01 Gew.-% und 0,1 Gew.-% liegt, d.h. zwischen 100 und 1000 ppm oder Gramm/Tonne.

2. Verfahren nach Anspruch 1, dadurch gekennzeichnet, daß die kurzkettige Monocarbonsäure in der Gruppe ausgewählt ist, die aus Ameisensäure, Essigsäure, Propionsäure und ihren Mischungen gebildet wird.

3. Verfahren nach Anspruch 1 oder Anspruch 2, dadurch gekennzeichnet, daß das genannte Mahlhilfsmittel ferner mindestens eine Brönsted-Base enthält.

4. Verfahren nach Anspruch 3, dadurch gekennzeichnet, daß die genannte Base in der Gruppe ausgewählt ist, die aus Natriumhydroxid, Kaliumhydroxid, kalk, Ammoniak, den Aminoverbindungen, deren Alkylgruppen alle weniger als 10 Kohlenstoffatome enthalten, und ihren Mischungen gebildet wird.

5. Verfahren nach Anspruch 4, dadurch gekennzeichnet, daß die genannten Aminoverbindungen in der Gruppe ausgewählt sind, die aus den primären Aminen, den sekundären Aminen, den Polyaminen, den primären Alkanolaminen, den sekundären Alkanolaminen und ihren Mischungen gebildet wird.

6. Verfahren nach Anspruch 5, dadurch gekennzeichnet, daß die Aminoverbindung Monoethanolamin ist.

7. Verfahren nach einem der Ansprüche 1 bis 6, dadurch gekennzeichnet, daß das genannte Mahlhilfsmittel zwischen 0,005% und 0,06% und vorzugsweise zwischen 0,012% und 0,035% Carbonsäure zuführt, ausgedrückt in auf die Gesamtmasse der zu mahlenden Stoffe bezogenen Massen-%, in Gegenwart einer Base entsprechend einem Neutralisationsgrad der Säure zwischen 0 und 1 (unter Einschluß dieser Werte).

8. Verfahren nach Anspruch 7, dadurch gekennzeichnet, daß der Neutralisationsgrad der Säure zwischen 0,1 und 0,7 (unter Einschluß dieser Werte) liegt.

9. Verfahren nach einem der Ansprüche 1 bis 8, dadurch gekennzeichnet, daß das genannte Mahlhilfsmittel ferner Wasser enthält.

10. Verfahren nach einem der Ansprüche 1 bis 9, dadurch gekennzeichnet, daß das genannte Mahlhilfsmittel ferner ein oder mehrere Additive enthält.

11. Verfahren nach Anspruch 10, dadurch gekennzeichnet, daß das genannte Additiv in der Gruppe gewählt ist, die aus den Farbstoffen, den Korrosionsinhibitoren, den Duftstoffen, den konventionellen Mahlhilfsmitteln und ihren Mischungen gebildet wird.

12. Verfahren nach einem der Ansprüche 1 bis 11, dadurch gekennzeichnet, daß die Menge des Additivs unter 8% liegt.

13. Verfahren nach einem der Ansprüche 1 bis 12, dadurch gekennzeichnet, daß das genannte Mahlhilfsmittel in einem Verhältnis von 0,02% bis 0,06% der aktiven Materialien zum Gewicht der genannten Rohmaterialien eingesetzt wird.

14. Verfahren nach einem der Ansprüche 1 bis 13, dadurch gekennzeichnet, daß das genannte Mahlhilfsmittel eingesetzt wird durch die Zugabe:
- zu dem gebrochenen Material am Eingang des Mahlwerks,
- direkt im Innern des Mahlwerks,
- zu dem Material, das bereits einen Durchgang durch das Mahlwerk genommen hat, an jedem Punkt des Mahlsystems
- oder an mehreren dieser Stellen gleichzeitig.

15. Verfahren nach einem der Ansprüche 1 bis 14, dadurch gekennzeichnet, daß die zu mahlenden Rohmaterialien im wesentlichen aus Kalk und Mergel zusammengesetzt sind.

16. Verfahren nach einem der Ansprüche 1 bis 15, dadurch gekennzeichnet, daß das Mahlen im trockenen oder feuchten Medium ausgeführt wird.
